# EUROPEAN PATENT SPECIFICATION

(11) **EP 4 574 250 B1**
(45) Date of publication and mention of the grant of the patent: **13.05.2026**
(21) Application number: 24383265.6
(22) Date of filing: 22.11.2024
(51) Int. Cl.: B01F 21/20, C02F 103/42, C02F 1/68, C02F 1/76

(54) **DOSING DEVICE FOR WATER TREATMENT IN SWIMMING POOLS**
DOSIERVORRICHTUNG ZUR WASSERAUFBEREITUNG IN SCHWIMMBECKEN
DISPOSITIF DE DOSAGE POUR LE TRAITEMENT DE L'EAU DANS DES PISCINES

(30) Priority: 21.12.2023 ES 202331061
(43) Date of publication of application: 25.06.2025
(73) Proprietor: Inquide, S.A.U., 08213 Polinyà (Barcelona) (ES)
(72) Inventor: JUNYENT LLADÓ, Jordi, 08213 POLINYA (Barcelona) (ES)
(74) Representative: Herrero & Asociados, S.L.

(56) References cited:
- EP-A1- 4 154 971
- EP-A2- 0 434 948
- JP-A- H10 296 271
- US-A- 4 217 331
- US-A1- 2020 377 378

## Description

### OBJECT OF THE INVENTION

The present invention falls within the technical field of water treatment, especially treatment by the addition of specific substances, as well as within the technical field of devices for the distribution of chemical products in swimming pool water, and refers in particular to a dosing device for water treatment in swimming pools, spas and similar installations, especially designed for above-ground removable swimming pools, although its use is not limited to this type.

### BACKGROUND TO THE INVENTION

In the current state of the art, there are a number of dismountable swimming pool or spa-type installations that have been specially designed for home use and for mainly seasonal use. These installations, hereinafter referred to generically as swimming pools, are smaller than fixed installations and are more economical to purchase and maintain.

Swimming pools require the care of various aspects for their correct functioning. For example, the pH level of the water in the pool must be regularly checked and balanced. In addition, chemical treatments must be provided to disinfect the water, and it is advisable to use substances to prevent the formation of algae, especially when the installation is located outdoors.

Due to the non-professional use of these pools, it is desirable that the user himself can carry out all maintenance tasks as easily as possible. One solution consists of wrapping the chemical products to be used in the water treatments, generally by encapsulating them in a porous capsule, thus avoiding spillage and undesired contact. In addition, since the amount of product contained in the encapsulation is fixed, this avoids risks arising from both excess and deficiency in the amount of product applied.

It is necessary that the encapsulated chemical product is put in contact with the water, which accesses the inside of the encapsulation, whose capsules have a determined porosity, to dissolve the product in a gradual way, allowing it to mix with the water to be treated and to act in the desired way.

In order to be able to apply these encapsulated products, it is necessary to have devices known generically as dispensers, in which a capsule of the chemical product is housed for its release into the water. Within the dispensers used for water treatment, two main groups can be clearly differentiated: floating dispensers and fixed dispensers.

Floating dispensers, as their name suggests, float and move freely in the water with the inconvenience this can cause to users. The fixed dispensers are attached to the water delivery nozzle and have the disadvantage that, due to this delivery flow, the chemicals to be dispersed dissolve quickly, resulting in a short-lived product. Furthermore, as they are specially configured for specific dimensions of the water delivery nozzle, they are not very versatile and cannot be interchanged between different pool models.

For example, in the prior art documents US6162407 and ES1149236U, the dispenser is coupled to the delivery nozzle to forcibly redirect its flow into a closed chamber where the chemicals are located, resulting in their rapid dissolution.

Regarding the use of porous capsules for the dispersion of chemicals in swimming pools, the international PCT application with publication number WO2020/190354 is known. However, this document discloses the use of capsules inside a filter outside the pool basin instead of in a dispenser.

On the other hand, existing devices are designed to hold only one capsule, which has to be replaced once it is exhausted. This is an additional disadvantage for these devices, as they do not allow maintaining adequate concentrations of chemicals for optimal water conditions for a long time, and they need to be replaced too often. In addition, as only one capsule can be housed, no dosage of the applied product is possible, nor can combinations of different products be made, such as disinfectants with flavouring agents. The Spanish patent with publication number ES2937068, owned by this same applicant, describes a device for water treatment in swimming pools and spas, especially those of the inflatable type, designed to be coupled to an impulsion nozzle to allow a gradual and controlled release of water treatment chemicals housed inside porous capsules. It allows the housing of several capsules, but its correct operation is associated with its installation next to the delivery nozzle.

Document EP0434948 discloses a swimming pool treatment device that comprises cylidrical pills comprising solid water treatment material such as trichloroisocyanuric acid. A collar surrounds the periphery of the pill so that only the end surfaces thereof are engaged by the water. Consequently, there is a constant erosion of the pill material. Various containers for one or more pills are disclosed. The containers which rest on the pool floor have downward projections that permit sufficient water flow below the pill container to prevent staining of the pool floor.

There is therefore a need for a device for water treatment in swimming pools that can overcome the disadvantages of the current state-of-the-art devices.

### DESCRIPTION OF THE INVENTION

The object of the invention consists of a dosing device for water treatment in swimming pools, attachable to an internal surface of the pool so that it is at least partially submerged under the sheet of water to allow a gradual and controlled release of water treatment chemicals and housed inside the device. Generally, these water-soluble chemicals are encapsulated inside porous capsules, although the device can also be used in cases where these products are bagged or even compacted.

For this purpose, the device basically comprises an outer casing, a product holder inside the casing that can be at least partially removed from it, magnetic elements to attach the casing to the inner surface of the pool and means of closing and locking to keep the product holder inside the casing.

The casing delimits an internal chamber in which the product holder is housed and is fitted with through openings that allow fluid two-way communication between the internal chamber and the outside of the device. These openings allow water from the pool to penetrate the interior of the chamber, so that the chemical product is gradually released from the capsule by contact with the water, which is then dispersed throughout the pool.

The product holder is, as indicated above, at least partially removable from the internal chamber of the housing so as to allow the replacement of the capsules once they have been used up. In the device of the invention, it is envisaged that the support is configured to house at least one porous capsule or similar element. From this derives one of the advantages of the device, which is its versatility, since it can be used in pools of different sizes, as it is sufficient to vary the number of capsules inserted to be able to be used in small pools as well as in larger ones.

Magnetic attaching elements temporarily link the casing to an internal surface of the pool, usually a wall, so that the device is submerged below the sheet of water contained in the pool. These magnetic attaching elements, such as magnets or similar, ensure correct and secure attachment to the internal walls of the pool, whether or not they are lined with a liner and without damaging either the wall or the liner.

Thanks to these magnetic attaching elements, another advantage of the device is that it can be temporarily and securely attached directly to the wall of any swimming pool without the need to alter it, as mentioned above. This means that there is no need to drill holes in the wall and no need to define specific wall recesses that could affect its preservation. Furthermore, the device can be positioned at the desired height depending on the height of the sheet of water, so it is not necessary to ensure a minimum filling level for it to work properly. If the water level drops, it is sufficient to separate the device from the wall to place it at a lower point so that it is submerged.

The closing and locking means cooperate between the housing and the product holder so that, when the product holder is housed in the inner chamber of the housing, it is locked against removal and prevents undesired manipulation, e.g. by children. The closing and locking means must be practicable to allow the removal of the holder when it is necessary to insert or replace the capsules and for this purpose comprise retaining and releasing elements which can be manipulated manually. Various embodiments of such locking means are envisaged, including, by way of example and without limitation, clipping elements, triggers or the like.

In the preferred embodiment of the device, the product holder is removable from the casing by simply sliding it out after releasing the closing and locking means. This has the additional advantage of facilitating the refilling of products as it is not necessary to remove the device from the pool or to disassemble it completely.

In the case of micro-perforated capsules, these allow the release of the necessary amount of chemical product (Chlorine, Bromine, etc.) for the disinfection of the water, keeping it constant within the ideal range; for example, 0.5-2 ppm for Chlorine or 3-5 ppm for Bromine. At the same time the shelf life of the chemicals is extended from the usual 7-10 days for Chlorine and Bromine tablets to approximately one month.

As already indicated, this device allows the dosage to be adjusted according to the volume of the pool, as it is configured to contain a plurality of capsules or similar elements, up to five in the preferred embodiment, allowing up to five corresponding capsules to be contained. Finally, users are safer as they will never come into direct contact with the chemical contained in the capsules, which is released already diluted in the water to be treated.

The device thus described overcomes the disadvantages of the current state of the art in a simple and advantageous way.

### DESCRIPTION OF THE DRAWINGS

In order to complement the description being made and in order to assist in a better understanding of the features of the invention, in accordance with a preferred example of a practical embodiment thereof, a set of drawings is attached hereto as an integral part of the said description, in which the following is illustratively and non-limitingly depicted:
Figure 1.- Shows a front perspective view of the device.
Figure 2.- Shows a rear perspective view of the device.
Figure 3.- Shows a perspective view of an exploded view of the device, showing its main elements.
Figure 4.- Shows a detailed view of the locking and locking means of the device.
Figure 5.- Shows a top view of the device in the area of the closing element.
Figure 6.- Shows a detail of the closure according to a cut made by plane A-A in figure 5.
Figure 7.- Shows a front perspective view of the device in which the capsule holder housed inside the casings is partially removed.
Figure 8.- Shows a rear perspective view of the device in which the product holder housed inside the casings is partially removed.

### PREFERRED EMBODIMENT OF THE INVENTION

A detailed explanation of an example of a preferred embodiment of the subject matter of the present invention is given below with the aid of the figures referred to above.

The dosing device for water treatment in swimming pools described is designed to be attachable to an internal surface of a swimming pool so that it is at least partially submerged under the sheet of water, to allow a gradual and controlled release of soluble water treatment products. In this preferred embodiment, these products are encapsulated inside porous capsules (1).

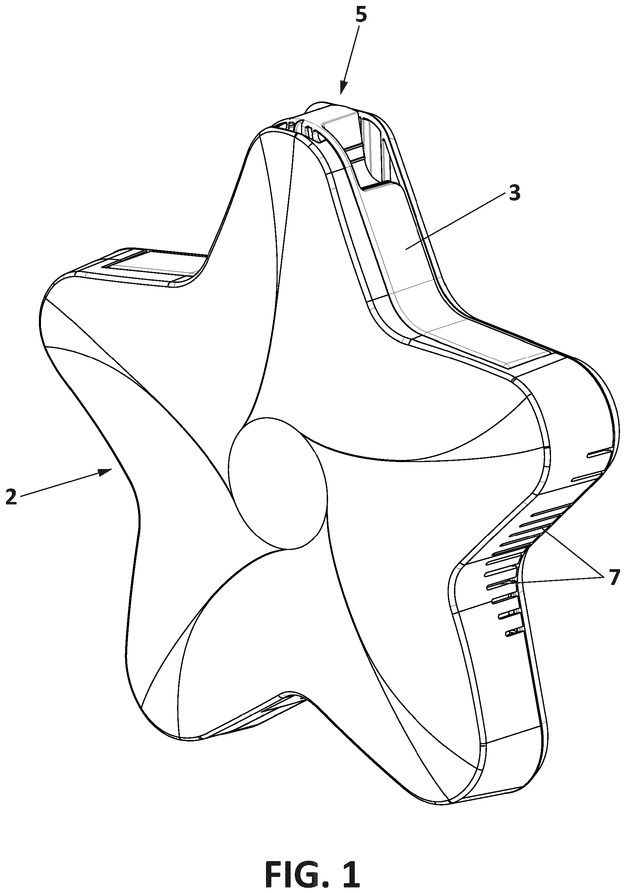

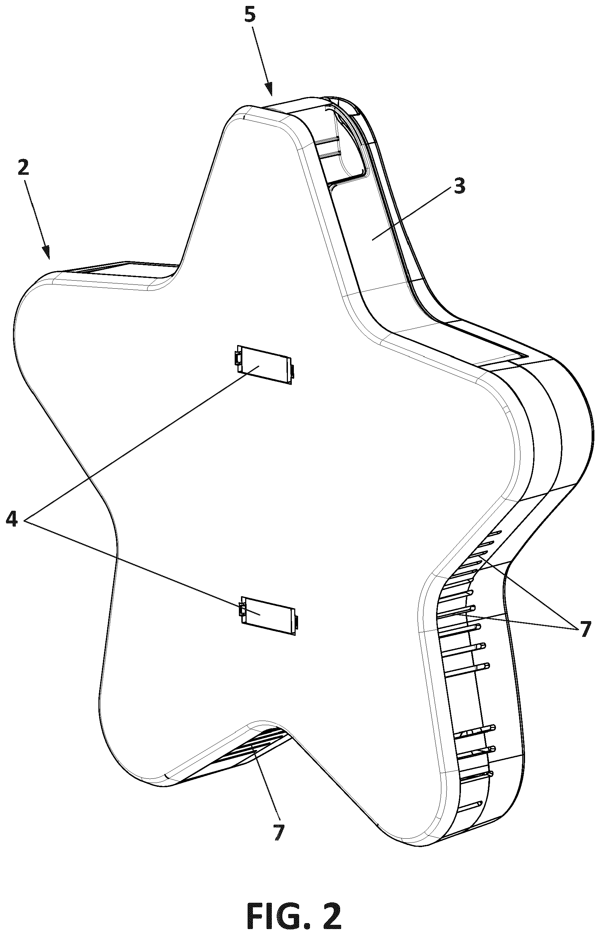

For this purpose, the device comprises an external casing (2), a product holder (3) housed inside the casing (2) and at least partially removable from it, at least one magnetic attachment element (4) for connecting the casing (2) with the internal surface of the swimming pool, and means of closure (5) and locking for immobilising the product holder (3) inside the casing (2), as shown in figures 1-3.

The casing (2) delimits an inner chamber (6) in which the product holder (3) is housed and is provided with through openings (7) that allow a fluid and bidirectional communication between the inner chamber (6) and the outside of the device to allow the solubilisation and release of the chemicals inside the capsules (1) into the water. In this way, the through openings (7) allow the pool water to penetrate the inner chamber (6) and impregnate the capsules (1) of the product holder (3). On contact, and thanks to the porosity of the capsules (1), the chemicals are gradually solubilised and released, which are diffused and dispersed throughout the pool shell as they leave the inner chamber (6) through the through openings (7).

The casing (2) is made up in this embodiment of a first portion (8) and a second portion (9), which can be assembled together by means of corresponding couplings (10) that cooperate to hold them together. As can be seen in the figures, the casing (2) in this preferred embodiment has a geometry that evokes a five-armed starfish with rounded tips.

The product holder (3) is made up of a plate (11) in which a number of housings (12) are defined to hold the corresponding capsules (1). In the preferred embodiment shown in the figures, the plate (11) has a geometry in plan that evokes a five-pointed star, in correspondence with the geometry of the housing (1). Each of the five housings (12) is arranged on the corresponding arms of the plate (11), so that the capsules (1) are equidistantly spaced on the product holder (3) to allow uniform dosage in case five capsules (1) are inserted.

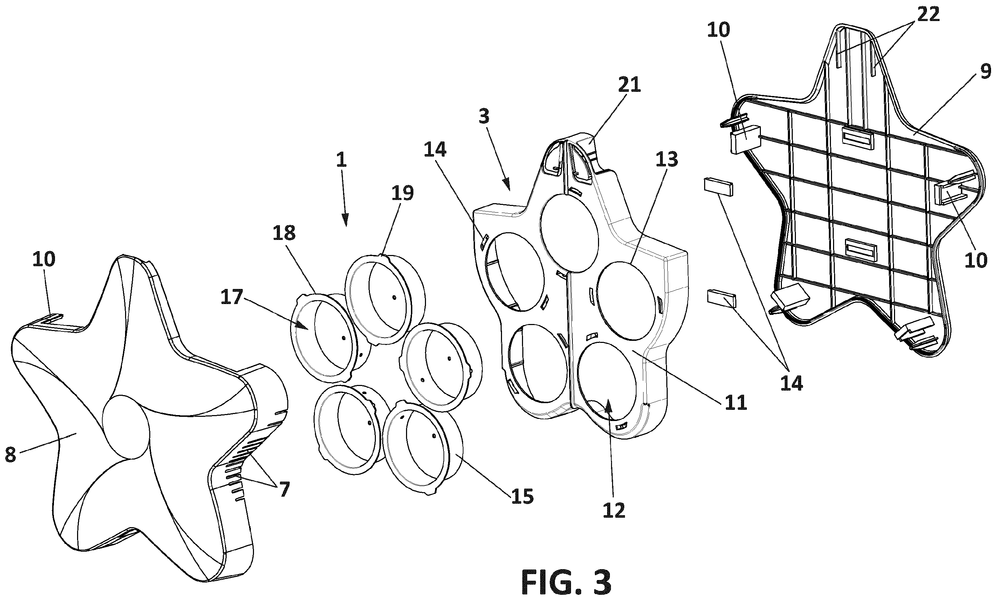

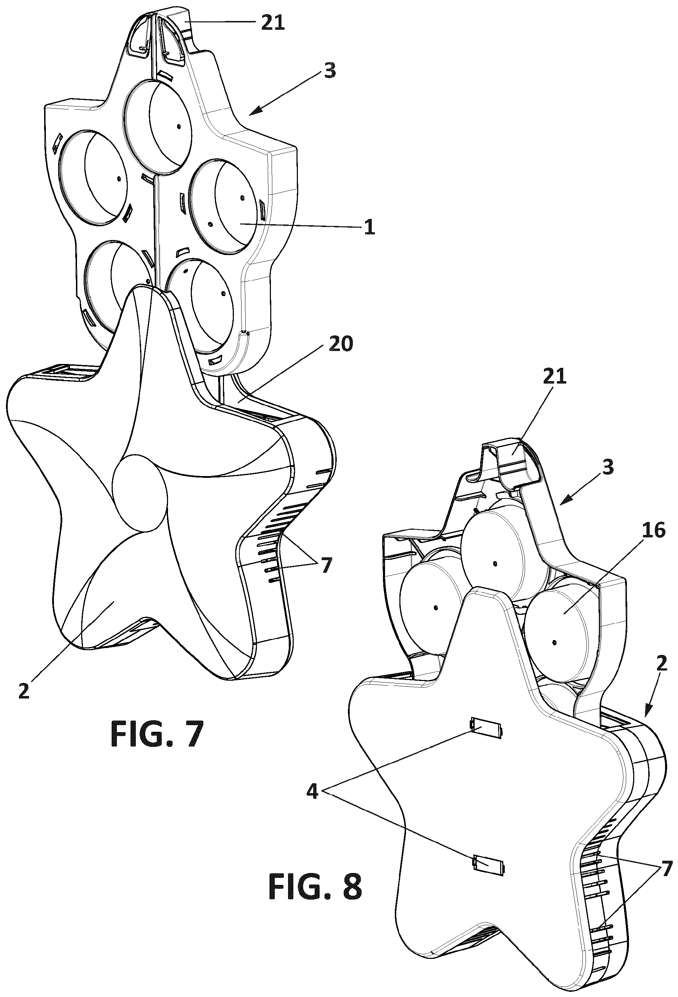

Each of the housings (12) comprises a central hole (13), circular and passing through the plate (11), and lateral recesses (14), arranged at two opposite points of the perimeter of the central hole (13). As can be seen in figures 3, 7 and 8, each of the capsules (1) comprises a hollow cylindrical body (15), in which the chemical substance is housed, with a closed base (16) and an open base (17) with a perimeter extension (18) from which tabs (19) start at the bottom. A sealable lid on the perimeter extension (18) closes the open base (17).

Each central hole (13) has diametrical dimensions greater than those of the hollow cylindrical body (15) and smaller than those of the perimeter extension (18). In this way, the capsules (1) are inserted into the housings (12) and retained in the central hole (13) when touching the perimeter extension (18). The tabs (19) are configured to engage with the recesses (14), thus cooperating to obtain a correct arrangement and immobilisation of the capsules (1) in the product holder (3).

The magnetic attachment element (4) directly and removably links the casing (2) to the internal surfaces of the pool. In this preferred embodiment, the magnetic attachment element (4) consists of two magnets located on the outer face of the second portion (9).

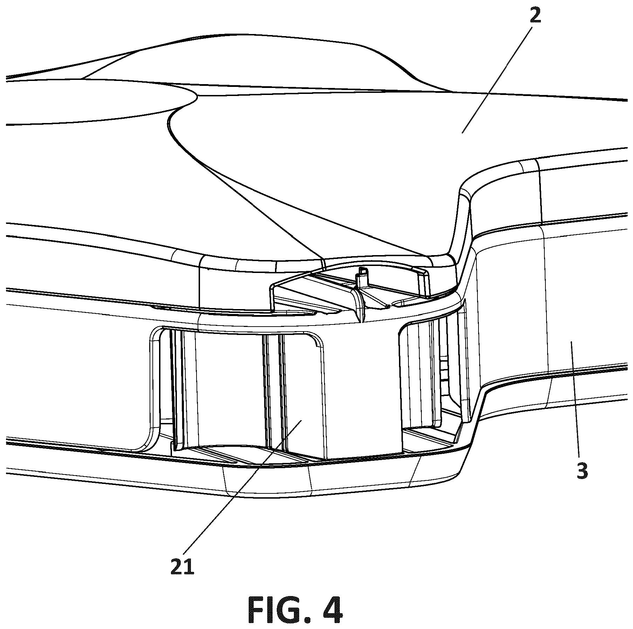

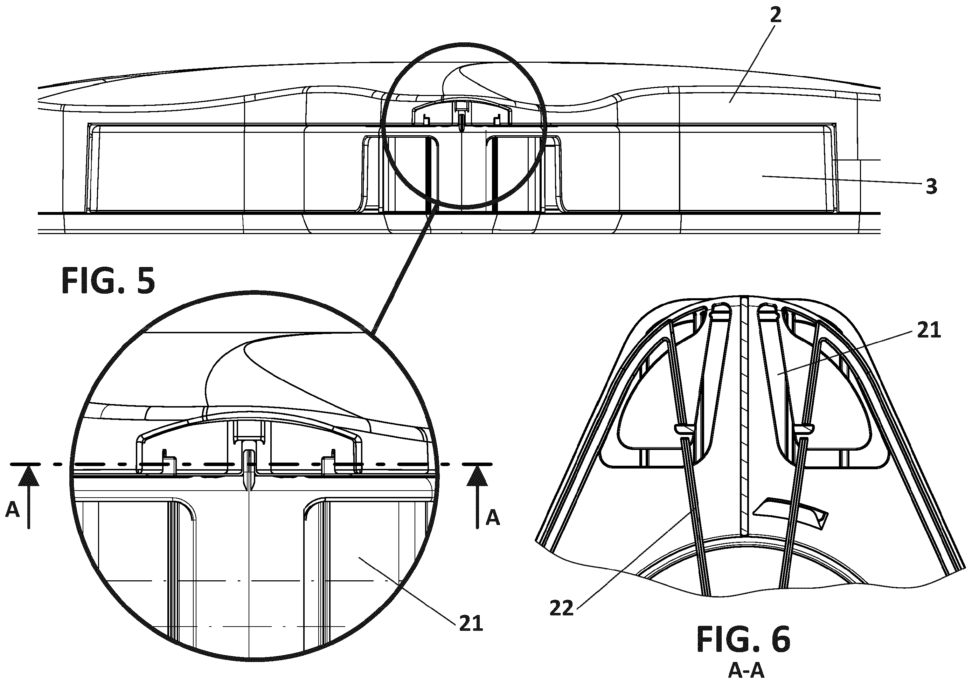

The closure means (5) of this preferred embodiment are shown in detail in figures 4, 5 and 6. As can be seen, the product holder (3) slides in the internal chamber (6) of the casing (2), into and out of which it slides through a groove (20) defined in the casing (2) and configured for this purpose.

These closing means (5) consist in this embodiment of flexible fins (21) defined at one end of the plate (11) of the product holder (3), and ribs (22) defined in the internal chamber (6) of the casing (2).

## Claims

1. A dosing device for water treatment in swimming pools, for release of soluble chemicals, wherein the device comprises:
- an outer casing (2) with an inner chamber (6) and through openings (7) for fluid two-way communication between the inner chamber (6) and the outside;
- a product holder (3) housed in and at least partially removable from the inner chamber (6) of the casing (2);
- closure means (5) for locking and immobilisation of the product holder (3) in the internal chamber (6) of the casing (2); **characterized in that** the dosing device is attachable to an internal surface of a swimming pool, wherein the dosing device further comprises
- at least one magnetic attachment element (4) for removable and direct attachment of the casing (2) to the inner surface of the pool;
and **in that** the product holder (3) can slide in the inner chamber (6) of the casing (2), into and out of which it can slide through a slot (20) defined in the casing (2).

2. Device according to claim 1 wherein the casing (2) comprises a first portion (8) and a second portion (9) which can be assembled together by means of corresponding couplings (10).

3. Device according to any one of the preceding claims wherein the product holder (3) comprises a plate (11) with a plurality of housings (12).

4. Device according to any one of claim 3 wherein closure means (5) consist of flexible fins (21) defined at one end of the plate (11) of the product holder (3), and ribs (22) defined in the inner chamber (6) of the casing (2).

## Patentansprüche

1. Dosiervorrichtung zur Wasserbehandlung in Schwimmbecken zur Freisetzung von löslichen Chemikalien, wobei die Vorrichtung umfasst:
- eine äußere Einhausung (2) mit einer inneren Kammer (6) und Durchgangsöffnungen (7) zur Fluid-Zweiwege-Kommunikation zwischen der inneren Kammer (6) und der Außenseite;
- einen Produkthalter (3), der in der inneren Kammer (6) der Einhausung (2) untergebracht und zumindest teilweise daraus entnehmbar ist;
- Verschlussmittel (5) zum Verriegeln und Immobilisieren des Produkthalters (3) in der inneren Kammer (6) der Einhausung (2); **dadurch gekennzeichnet, dass** die Dosiervorrichtung an einer Innenfläche eines Schwimmbeckens anbringbar ist, wobei die Dosiervorrichtung ferner umfasst
- mindestens ein magnetisches Anbringungselement (4) zur entfernbaren und direkten Anbringung der Einhausung (2) an der Innenfläche des Beckens; und
dass der Produkthalter (3) in der inneren Kammer (6) der Einhausung (2) gleiten kann, in die und aus der er durch einen in der Einhausung (2) definierten Schlitz (20) gleiten kann.

2. Vorrichtung nach Anspruch 1, wobei die Einhausung (2) einen ersten Abschnitt (8) und einen zweiten Abschnitt (9) umfasst, die mittels entsprechender Kupplungen (10) zusammengebaut werden können.

3. Vorrichtung nach einem der vorhergehenden Ansprüche, wobei der Produkthalter (3) eine Platte (11) mit einer Vielzahl von Gehäusen (12) umfasst.

4. Vorrichtung nach Anspruch 3, wobei die Verschlussmittel (5) aus flexiblen Lamellen (21), die an einem Ende der Platte (11) des Produkthalters (3) definiert sind, und Rippen (22) bestehen, die in der inneren Kammer (6) der Einhausung (2) definiert sind.

## Revendications

1. Dispositif de dosage pour le traitement de l'eau dans des piscines, pour la libération de produits chimiques solubles, dans lequel le dispositif comprend :
- un boîtier (2) extérieur avec une chambre intérieure (6) et des ouvertures traversantes (7) pour une communication bidirectionnelle fluidique entre la chambre intérieure (6) et l'extérieur ;
- un support de produit (3) logé dans et pouvant au moins être partiellement retiré de la chambre intérieure (6) du boîtier (2) ;
- des moyens de fermeture (5) pour le verrouillage et l'immobilisation du support de produit (3) dans la chambre intérieure (6) du boîtier (2) ; **caractérisé en ce que** le dispositif de dosage peut être fixé à une surface interne d'une piscine, dans lequel le dispositif de dosage comprend en outre
- au moins un élément de fixation magnétique (4) pour une fixation libérable et directe du boîtier (2) à la surface intérieure de la piscine ;
et **en ce que** le support de produit (3) peut coulisser dans la chambre intérieure (6) du boîtier (2), à l'intérieur et à l'extérieur de laquelle il peut coulisser à travers une fente (20) définie dans le boîtier (2).

2. Dispositif selon la revendication 1, dans lequel le boîtier (2) comprend une première partie (8) et une seconde partie (9) qui peuvent être assemblées ensemble au moyen d'accouplements (10) correspondants.

3. Dispositif selon l'une quelconque des revendications précédentes dans lequel le support de produit (3) comprend une plaque (11) avec une pluralité de logements (12).

4. Dispositif selon la revendication 3, dans lequel les moyens de fermeture (5) sont constitués d'ailettes flexibles (21) définies à une extrémité de la plaque (11) du support de produit (3), et de nervures (22) définies dans la chambre intérieure (6) du boîtier (2).
